# EUROPEAN PATENT APPLICATION

(11) **EP 4 617 085 A1**
(43) Date of publication of application: **17.09.2025**
(21) Application number: 24162630.8
(22) Date of filing: 11.03.2024
(51) Int. Cl.: B60C 25/04

(54) **A TOOL**

(71) Applicant: Bicycle Innovations Ltd, Winchester, Hampshire SO23 0HN (GB)
(72) Inventor: SEARLES, Mark Aubrey, Hampshire, SO23 0HN (GB)
(74) Representative: D Young & Co LLP

(57) **Abstract**

A tool for installing a tyre onto a wheel rim, the tool comprises: a shoe, and a body, connected to the shoe, providing a handle portion. The shoe comprises: a first surface for contacting an inner portion of the side wall of the wheel rim; a second surface for contacting the radially outer edge of the wheel rim; a toe portion projecting beyond the leading edge of the second surface in the circumferential direction of the wheel rim and continuing the first surface in the circumferential direction of the wheel rim; and a shoulder portion. When installing a tyre on a wheel rim, at the cross-over point where the bead of a partially installed tyre crosses from outside the wheel rim to inside the wheel rim, the first surface and second surface are contactable with the inner portion of the side wall and radially outer edge of the wheel rim, respectively, with the toe portion projecting underneath the bead of the tyre at the cross-over point along the inner side wall of the rim. In this state, advancing the shoe in the circumferential direction toward the cross-over point applies a radially outward force to the bead, and the shoulder portion urges the bead in the direction from outside the wheel rim to inside the wheel rim.

## Description

### FIELD OF THE INVENTION

The present invention relates to the field of tools for installing tyres on wheel rims and/or for removing tyres from wheel rims, in particular, but not exclusively, for bicycle tyres and bicycle wheel rims.

### BACKGROUND OF THE INVENTION

Installing and removing bicycle tyres from bicycle wheel rims is necessary for maintenance and repair, for example to fix punctures and to replace worn tyres. Various tools are known for this purpose, including conventional tyre levers.

However, there are a number of problems with existing tools. For example, considerable force can be required, which makes it difficult and sometimes even impossible to remove or install a tyre manually without recourse to a workshop. This is especially a problem for modern tubeless tyres in which the fit between the bead of the tyre and the rim is extremely tight. With many rims now being manufactured to fit tubeless tyres or those fitted with a tube, even standard tyres can be a very tight fit, and it can be difficult to install the tyre without damaging the tube, or breaking the tool when removing or installing tight tyres. In some cases, the large force required to be applied to the tool can make the tool disengage from the rim and fly off which is undesirable. Some tools only work with rims known in the art as "hooked"; a feature on the tool that locates under the "hook" being used to help prevent the tool disengaging; such tools do not function well with "hookless" rims. In other cases, rims like those made from carbon fibre can be damaged. In other examples, multiple tools or multiple levers are required which is inconvenient. It is a further problem to make a tool to address these issues and which is also compact such that it can be easily carried and used for roadside repairs.

The present invention has been devised in view of the above problems.

### SUMMARY OF THE INVENTION

According to a first aspect of the invention there is provided a tool for installing a tyre onto a wheel rim, the tool comprising:
a shoe, the shoe comprising:
   a first surface for contacting an inner portion of the side wall of the wheel rim;
   a second surface for contacting the radially outer edge of the wheel rim;
   a toe portion projecting beyond the leading edge of the second surface in the circumferential direction of the wheel rim and continuing the first surface in the circumferential direction of the wheel rim; and
   a shoulder portion,
   and
a body, connected to the shoe, providing a handle portion,
wherein, when installing a tyre on a wheel rim, at the cross-over point where the bead of a partially installed tyre crosses from outside the wheel rim to inside the wheel rim, the first surface and second surface are contactable with the inner portion of the side wall and radially outer edge of the wheel rim, respectively, with the toe portion projecting underneath the bead of the tyre at the cross-over point along the inner side wall of the rim, whereby advancing the shoe in the circumferential direction toward the cross-over point applies a radially outward force to the bead, and the shoulder portion urges the bead in the direction from outside the wheel rim to inside the wheel rim.

A second aspect of the invention provides a tool for removing a tyre from a wheel rim, the tool comprising:
a removal hook comprising a leading edge for inserting between the tyre and the wheel rim; and
a body, connected to the removal hook, providing a handle portion, for urging the removal hook to prise a portion of the bead of the tyre over the radially outer edge of the wheel rim,
wherein the body is connected to the removal hook via an articulated joint to enable the body to be rotated relative to the removal hook.

A further aspect of the invention provides a tool according to the first aspect of the invention in combination with a tool according to the second aspect of the invention, wherein the body is in common.

Further optional features of the invention are defined in the dependent claims.

### BRIEF DESCRIPTION OF THE DRAWINGS

Embodiments of the invention will now be described, by way of non-limiting example, with reference to the accompanying drawings. The invention may further comprise, in any combination, any features of the embodiments which will now be described.
**Fig. 1** is a view of a first side of a tool according to an embodiment of the invention;
**Fig. 2** is the tool of Fig. 1 as viewed from the opposite side;
**Fig. 3** is an edge on view of the tool of Fig. 1;
**Fig. 4** is the tool of Fig. 1 as viewed from above;
**Fig. 5** is an exploded view of some of the component parts of the tool of Fig. 1;
**Fig. 6** is a view from above of the tool of Fig. 1 in use during installation of a tyre on a wheel rim;
**Fig. 7** is a view from above of the tool of Fig. 1 in use during installation of a tyre on a wheel rim;
**Fig. 8** is a view from the side of the tool of Fig. 1 in use during installation of a tyre on a wheel rim;
**Fig. 9** is a view from above of the tool of Fig. 1 in use during removal of a tyre from a wheel rim;
**Fig. 10** is a view from the side of the tool of Fig. 1 in use during removal of a tyre from a wheel rim;
**Fig. 11** is a view of the tool of Fig. 1 with the body in a rotated position relative to the removal hook compared to the previous figures;
**Fig. 12** is a view of the tool as in Fig. 11 in use during removal of a tyre from a wheel rim; and
**Fig. 13** is an explanatory view of the tool of Fig. 11 viewed from above from the point of view of the user in Fig. 12.

In the drawings, like parts are indicated with like reference numerals, and, for conciseness, description thereof will not be repeated. The drawings are not all to scale with each other.

### DETAILED DESCRIPTION

In this description, references to 'radial', circumferential' or 'axial' relate to the relevant directions relative to a wheel having a wheel rim to which the tool is being used to install or remove a tyre. The wheel has an axis about which it rotates defining an axial direction; radial directions emanate from the axis and are perpendicular to the axis; the circumferential direction is locally perpendicular to the radial direction, and perpendicular to the axial direction [perpendicular in this context meaning that the dot product of vectors in the respective directions is substantially zero].

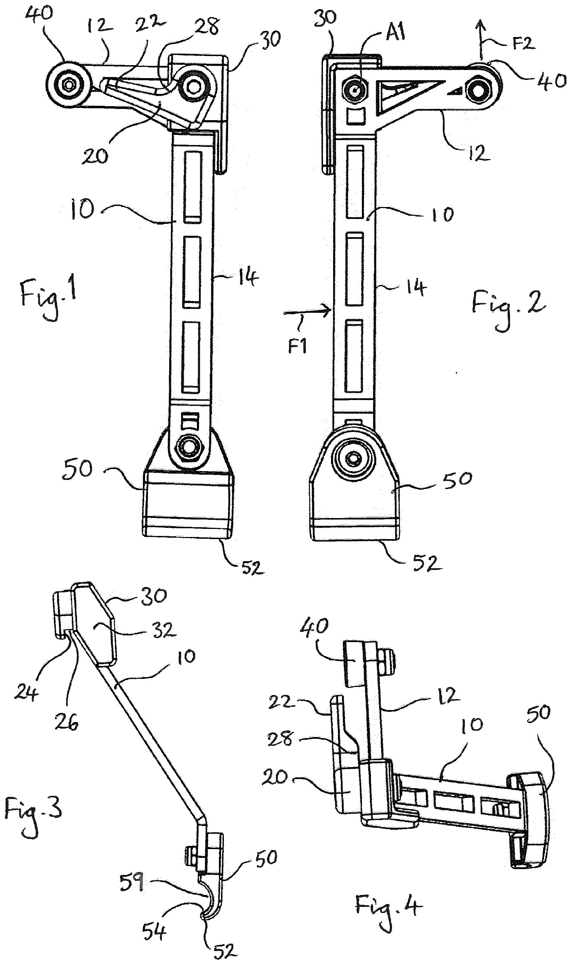

Referring to Figs. 1 to 5, there is shown a tool according to an embodiment of the invention.

The tool comprises a body 10 integrally formed with an arm 12. The body 10 is elongate and its middle section provides a handle portion 14. The body 10 and arm 12 form an L-shape in this embodiment, but this is not essential, and they could be provided at a different angle or even straight. At one end of the body 10 there is a shoe 20 rotatably joined to the body, by suitable means, such as a nut and bolt. The shoe 20 has a tapered toe portion 22, a first surface 24, a second surface 26, and a shoulder portion 28. The first surface 24 runs along the length of the shoe 20, including the toe portion, and is substantially perpendicular to the second surface 26, to define a groove. The toe portion 22 projects beyond the leading edge of the second surface 26. An optional corner piece 30 is provided that acts as a spacer between the shoe and the body, and provides a thumb-press surface 32 for pressing a thumb against when using the tool to install a tyre on a wheel rim. The end of the arm 12 distal to the body 10 is provided with a bead-engaging portion 40, which in this embodiment is in the form of a roller, rotatably joined to the arm 12, but could take other forms, such as a fixed projection. A removal hook 50 is rotatably joined to the body 10 at the opposite end of the body 10 from the shoe 20. The removal hook 50 comprises a leading edge 52, and a lip 54.

The components of the tool can be made from any material or materials of suitable strength, for example metal or plastics material. In the preferred embodiment, the body 10 comprises ferrous metal, such as stainless steel, and the shoe 20, corner piece 30, bead-engaging portion 40, and removal hook 50 are made of plastics material, such as nylon, POM (acetal), glass-filled plastics or other suitable engineering plastics. It is preferred that the parts that come into contact with the wheel rim or tyre when using the tool are made from plastics or other materials that are unlikely to damage the wheel rim or tyre. It is also desirable that the material used can provide a low surface friction so as to not resist movement between the parts and the tyre or rim. The body 10 can be provided with apertures (such as cut-out portions) to reduce weight, while still providing adequate strength.

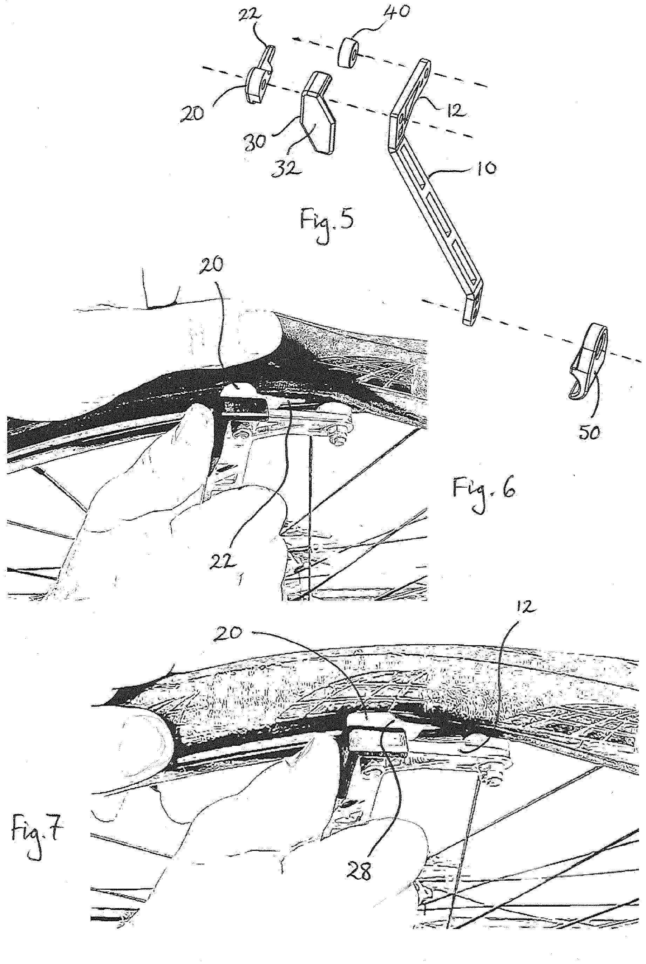

As can be seen from the exploded view of Fig. 5, the components can be assembled together using a nut and bolt (not shown) along each of the three dashed lines. Preferably locknuts (such as with nylon inserts) are used to avoid the nuts loosening in use. The nuts holding the shoe 20, bead-engaging portion 40 and removal hook 50 can be tightened to suit the function of each element, such as by fully tightening then loosening by unscrewing through a desired angle. For example, in this embodiment it is desirable for the bead-engaging portion 40 to freely rotate so the bolt and nut can be loosened to the point where the nut and bolt rotate freely with respect to the arm 12, whereas the shoe 20 and the removal hook 50 are tightened such that there is some friction and resistance to rotation so that the shoe 20 and removal hook 50 are not loose, but can easily be rotated with finger pressure to a desired angle with respect to the body 10, and will stay at that angle. Fastenings other than a nut and bolt, such as a rivet, can be used to provide a fixed or articulated joint for any or all of the component parts. However, removeable fastenings, such as a nut and bolt, are preferred because the shoe 20, corner piece 30, bead-engaging portion 40, and/or removal hook 50 can be removed and replaced with new parts in the event of wear or damage.

### Tyre Installation

To install a tyre on a wheel rim, the bead of a first side wall of the tyre can usually be manually lifted over the wall of the rim all the way around; the bead of the opposite tyre wall can be partially forced over the side wall of the wheel rim by hand using finger and thumb pressure, until the bead becomes too tight and the user has a portion of taught bead not installed on the wheel rim, i.e. outside the wheel rim, and forming a chord with respect to the circle of the wheel rim. There are two cross-over points where the bead of the partially installed tyre crosses from outside the wheel rim to inside the wheel rim, and the bead is in tight contact with the radially outer edge of the wheel rim at those points.

In use, the tool is applied at one of these cross-over points by engaging the shoe such that the second surface 26 contacts the radially outer edge of the wheel rim, the first surface 24 contacts an inner portion of the side wall of the wheel rim, and the toe portion projects underneath the bead of the tyre adjacent to the cross-over point. Referring to Fig. 3, the surfaces 24 and 26 form a channel in which the radially outer edge of the wheel rim sits, with the surface 24 providing a lip to prevent the shoe 20 from disengaging sideways (axially with respect to the wheel). Some wheel rims have an inward projection around their inner side wall (known as a 'hook' in the art) to capture the tyre bead, especially for high pressure tyres, though `hookless' rims are also common. The first surface 24 can contact the inner portion of the side wall, whether that is a 'hook' or the flat face of a hookless rim. In an alternate embodiment, the surface 24 is provided with a groove to receive a hooked rim wall.

To facilitate engaging the shoe 20 with the wheel rim, the shoe can be rotated relative to the body 10, such that the toe portion 22 either projects upward at an angle above the arm 12 (i.e. further up than in Fig. 1, by rotating clockwise in that figure), or the toe portion 22 projects downwards at an angle between the arm 12 and the handle portion 14 of the body 10 (i.e. by rotating the shoe 20 anti-clockwise from the position shown in Fig. 1). With the shoe 20 contacting the wheel rim, the body 10 can now be rotated to bring the bead-engaging portion 40 adjacent to the outer side wall of the wheel rim. This is the position shown in Figs. 6 to 8.

Referring to Figs. 6 and 7, the tool is advanced circumferentially toward the cross-over point such that the toe portion 22 projects underneath the bead of the tyre at the cross-over point. By applying further force, such as via the handle portion 14 and/or thumb-press surface 32, the toe portion is forced further under the bead, which lifts the bead and relieves some of the friction at the cross-over point (aided by the tapered shape, if provided, of the toe portion 22, and by the second surface 26 being held against the radially outer edge of the wheel rim). This enables the tool to be advanced further circumferentially along the rim edge, and the shoulder portion 28 of the shoe 20 urges the bead sideways to install more of the bead on the rim. The bead presses against the shoulder portion 28 of the shoe 20 to keep the first surface 24 in contact with the inner portion of the side wall of the wheel rim, and the toe portion 22 projects under the bead; both of these features separately assist in maintaining the tool in place so that it cannot inadvertently disengage. The location of the handle portion 14 also assists in this regard. The tool can also be used initially to push the second bead of the tyre over the rim prior to the point where it first becomes tight as described near the start of the process, by simply pushing on the thumb-press 32 circumferentially and turning the wheel round manually, thus avoiding the need to push the tyre bead over the rim by hand. The shoe 20 tends not to disengage from the wheel rim because the tyre pushes the surface 24 against the inner wall of the wheel rim and the shape of the tyre tends to move over the toe portion 22 resulting in the surface 26 being pushed against the radially outermost edge of the wheel rim, thus tending to prevent the tool from disengaging even before the toe portion 22 moves under the tyre bead to a state such that it physically cannot disengage.

In many cases, the tool can be advanced in this way to completely install the tyre on the wheel rim all the way round. So, the arm 12, bead-engaging portion 40, and the articulation of the shoe 20 with respect to the body 10 are optional features, that are not essential in all embodiments of the invention.

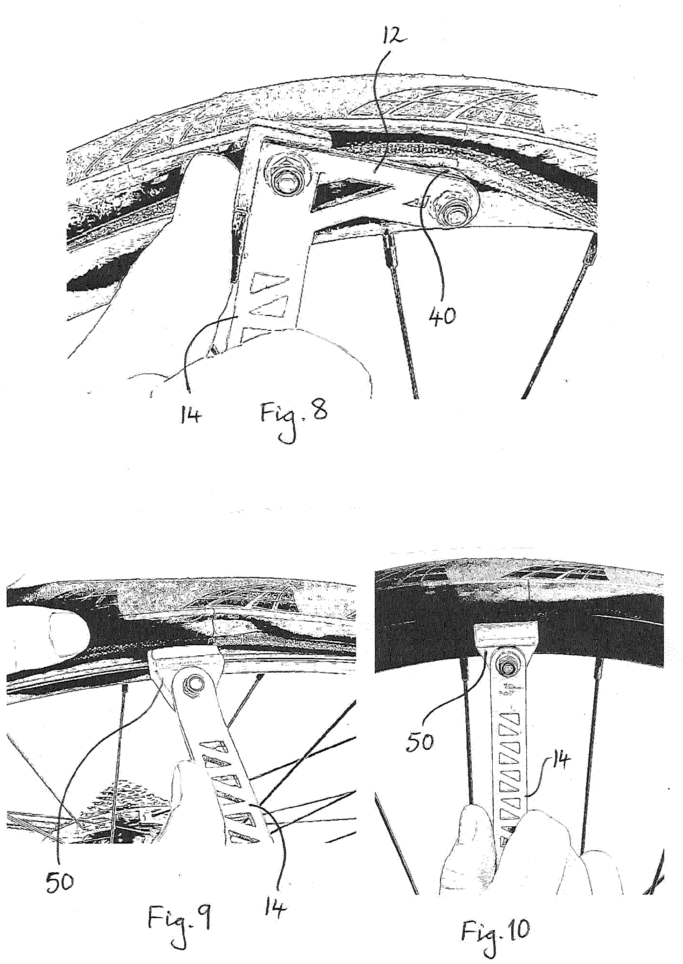

However, for very tight beads, it may be that simply pushing to advance the tool is insufficient to force the bead over the edge of the wheel rim. The tool is now in the situation illustrated in Fig. 8, in which the bead-engaging portion 40 is in contact from below with a portion of the tyre bead that is on the outside of the wheel rim, beyond the cross-over point in the direction of advancing the tool. The user can now push on the handle portion 14 of the body 10 to rotate the body 10 about the shoe 20, which acts as a pivot, which rotates the arm 12 upward to lift the bead-engaging portion 40 and hence to force the bead upward, so that the tool can be advanced further. The shoulder portion 28 of the shoe 20 urges and retains the bead onto the wheel rim. This process of (i) rotating to lift the bead, and (ii) advancing the tool while in this state, can be repeated multiple times, gradually progressing round the rim until the tyre is fully installed on the wheel rim.

In more detail, there are basically two ways the tool can force the tyre on here: (a) with a softer tyre, the upward force under the bead can be applied at the same time as pressing forwards on the thumb press 32 (a roller, if provided, as the bead-engaging portion 40, will turn in these circumstances); and (b) with very tight or stiff tyres, what happens is that the user pushes forwards as far as possible, then levers the bead upwards and, as this is being done, some of the bead will naturally move over and sit on the top of the rim edge because it is being urged over by the shoe 20 at the same time, in this position the bead then becomes looser on the inside of the rim and the user can then push forwards again on the thumb press to incrementally advance the tool.

Further information on levering the bead is illustrated in Fig. 2, which shows that a force F1 applied to the handle portion 14 causes a force F2 at the bead-engaging portion 40 when the body is rotated about the axis A1 of the bolt joining the body 10 to the shoe 20. In a preferred embodiment of the invention, the distance from the axis A1 to the point of application of the force F1 to handle portion 14, is greater than the distance from the axis A1 to the bead-engaging portion 40. This means that the tool achieves a mechanical advantage such that the force F2 will be greater than the force F1; so even very taught beads can be lifted by only applying a manageable force to the handle portion 14.

As can be seen for example in Fig. 3 or 5, in this embodiment the body 10 is cranked, e.g. bent through an angle, near where it is joined to the shoe 20. This means that when the surfaces 24, 26 are engaged with the wheel rim, the handle portion 14 is angled away from the plane of the wheel. So, as can be seen in Fig. 6, there is clearance between the handle portion 14 and the wheel to enable a user to grip the handle portion 14.

### Tyre Removal

Referring now to Figs. 9 and 10 (as well as Figs. 1 to 5), the leading edge 52 of the removal hook 50 is inserted between the inner side wall of the wheel rim and the tyre bead. The lip 54 engages under and retains the bead (Fig. 9) such that when the handle portion 14 of the tool is pressed, a portion of the bead is prised or levered over the edge of the rim, to achieve the state shown in Fig. 10, with the removal hook 50 held between the outer wall of the wheel rim and the portion of tyre bead that is now outside the wheel rim. This is similar to the action of a conventional tyre lever. Conventionally multiple levers would be used (which is undesirable), or the one lever would be forced circumferentially round the rim to remove the tyre, which can be very difficult or impossible in the case of tight beads.

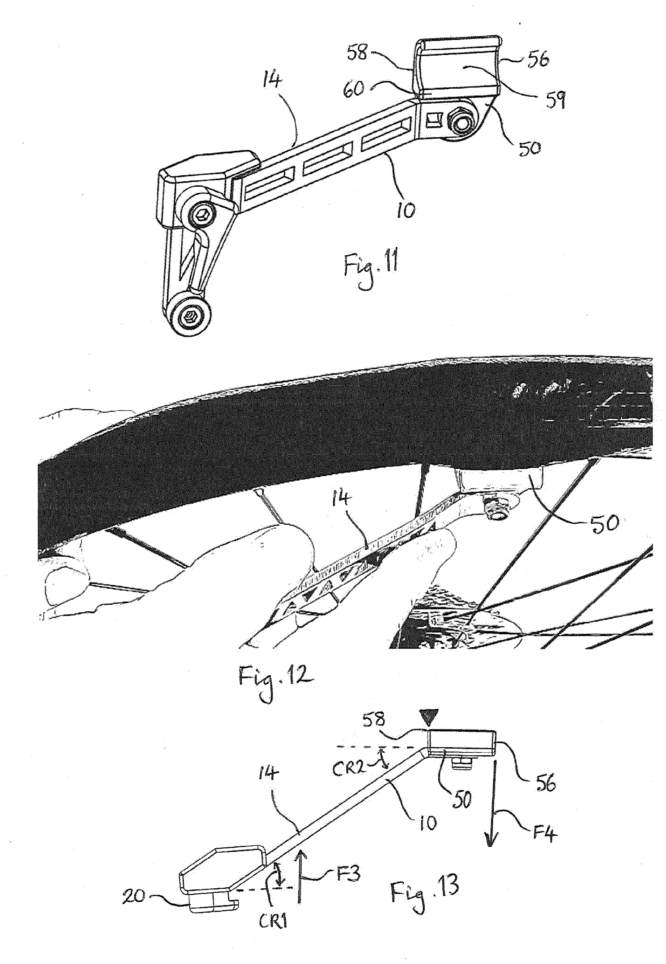

With the tool according to this embodiment of the invention, the body 10 is connected to the removal hook 50 via an articulated joint. The body 10 can be rotated relative to the removal hook 50 to the state illustrated in Fig. 11 (compared to Fig. 10); in this example the rotation is through approximately 90 degrees. From the state shown in Fig. 10, with the initial portion of the tyre bead removed, the body 10 is rotated by turning the handle portion 14, to obtain the state shown in Fig. 12. In this state, by urging the handle portion 14 toward the wheel rim, the front portion 56 of the removal hook 50 is urged axially away from the wheel rim and consequently pulls or levers the next portion of the bead over the edge of the wheel rim. The pressing on the handle portion toward the wheel rim can be released, the tool can be advanced, and the process repeated to incrementally remove more bead from the wheel rim, until the bead becomes loose and the tool can be easily advanced round under the tyre and either the whole bead is removed or it can be finished manually by hand.

The levering process is illustrated schematically in Fig. 13, which is a view from above, and shows: a force F3 applied to the handle portion 14 (toward a wheel rim, not shown); the edge of the rear portion 58 of the removal hook 50 acts as a fulcrum (shown by a triangle) pressing against the outer wall of the wheel rim (not shown); and the front portion 56 of the removal hook is urged away from the wheel rim to apply a force F4 to a tyre bead in the opposite direction from the force F3. Again, there is mechanical advantage in this embodiment, such that the force F4 can be much greater than could be achieved by finger or thumb pressure alone.

As can be seen for example in Figs. 3, 5 and 13, in this embodiment the body 10 is cranked through an angle, near where it is joined to the removal hook 50. This means that when a tyre is being removed from a wheel rim, the handle portion 14 is angled away from the plane of the wheel. So, as can be seen in Fig. 12, there is clearance between the handle portion 14 and the wheel to enable a user to grip the handle portion 14 and to press the handle portion 14 toward the wheel rim to prise more bead over the edge of the wheel rim.

It is preferable that the body 10 is made from a stiff material to avoid it flexing when pushing the handle towards the wheel rim, and that the removal hook 50 is also a stiff material. Preferably the removal hook has a low friction inner surface 59 and/or front portion 56 to reduce friction with the tyre when advancing the tool.

When removing a tyre, the arm 12, corner piece 30 and bead-engaging portion 40 facilitate the tool to be held in a pistol grip whereby the levering can be comfortably carried out and then the tool pushed forward with the arm 12, corner piece 30 and bead-engaging portion 40 pressing against the palm of the hand.

### Further variants

The overall length of the body 10 is preferably in the range of from 80 mm to 180 mm, for example 140 mm. Although workshop versions of the tool can have longer handles to make tyre removal even easier.

The length of the first surface 24 from the tip of the toe portion 22 of the shoe 20, to the rear (heel) of the shoe 20, is preferably in the range of from 20 mm to 45 mm, for example 32 mm.

The width of the second surface 26 is preferably slightly greater than 4 mm, for example 4.1 mm to accommodate a wide range of wheel rims.

The length of the toe portion 22 projecting beyond the leading edge of the second surface 26 is preferably in the range of from 5 mm to 20 mm, for example 11 mm.

The overall length of the arm 12 is preferably in the range of from 40 mm to 60 mm, for example 50 mm.

The distance from the bead-engaging portion 40 to the rotation axis A1 of the shoe/body joint is preferably in the range of from 30 mm to 50 mm, for example 40 mm.

The length of the leading edge 52 of the removal hook 50 (i.e. the width of the removal hook 50 from front portion 56 to rear portion 58) is preferably in the range of from 20 mm to 40 mm, for example 30 mm.

The crank angle CR1 (see Fig. 13) of the body 10 near the shoe 20 is preferably in the range of from 25 degrees to 45 degrees, for example 30 degrees or 35degrees.

The crank angle CR2 (see Fig. 13) of the body 10 near the removal hook 50 is preferably in the range of from 25 degrees to 50 degrees, for example 35 degrees or 40 degrees.

A preferred embodiment of the tool has both the tyre installation and tyre removal functions, sharing a body 10 in common (as in the Figures) with the shoe 20 and removal hook 50 preferably provided at opposite ends of the elongate body, thought this is not essential and other configurations and body shapes are envisaged. However, embodiments of the invention are also contemplated in which the tool has only one function, for example with the body 10 provided only with the shoe 20 (and optionally arm 12 and bead-engaging portion 40), or with only a removal hook 50. In another embodiment of the invention, a pair of tools are provided, one for tyre installation (with a body and shoe) and one for tyre removal (with a body and removal hook).

In another embodiment, the body 10 and corner piece 30 are made in one piece, such as by plastic moulding.

In a further embodiment, the surface 24 is provided with a groove to receive a so-called 'hook' of a hooked rim wall.

In other embodiments of the invention, one or more motion restrictors (or `stops') are provided to limit the angle through which the body 10 can be rotated with respect to the removal hook 50. For example, the body 10 can be rotated to the state shown in Fig. 11, but no further in the clockwise direction; this conveniently keeps the body substantially in the circumferential direction. The motion restrictor in this embodiment comprises a ridge 60 provided on the removal hook 50 that abuts the edge of the body 10 when it is rotated to this so-called "90 degree" position. In another example, when the body is rotated to the position of Fig. 10, the so-called "0 degree" position, a motion restrictor prevents the body 10 rotating any further in the anti-clockwise direction. In this case, one example of the motion restrictor is a projection (not shown) on the edge of the body that abuts against the ridge 60 on the right-hand side toward the front portion 56 of the removal hook 50.

Although embodiments of the invention are primarily for use with bicycle wheels, it is understood that the tool can be used on similar wheels (which may be known as `cycle wheels'), such as tricycle wheels, unicycle wheels, bicycle trailer wheels, the wheels of child-carrying cycle attachments (such as "tagalongs" (trade mark)), and also with motorcycle wheels, car wheels and so forth.

## Claims

1. A tool for installing a tyre onto a wheel rim, the tool comprising:
a shoe, the shoe comprising:
a first surface for contacting an inner portion of the side wall of the wheel rim;
a second surface for contacting the radially outer edge of the wheel rim;
a toe portion projecting beyond the leading edge of the second surface in the circumferential direction of the wheel rim and continuing the first surface in the circumferential direction of the wheel rim; and
a shoulder portion,
and
a body, connected to the shoe, providing a handle portion,
wherein, when installing a tyre on a wheel rim, at the cross-over point where the bead of a partially installed tyre crosses from outside the wheel rim to inside the wheel rim, the first surface and second surface are contactable with the inner portion of the side wall and radially outer edge of the wheel rim, respectively, with the toe portion projecting underneath the bead of the tyre at the cross-over point along the inner side wall of the rim, whereby advancing the shoe in the circumferential direction toward the cross-over point applies a radially outward force to the bead, and the shoulder portion urges the bead in the direction from outside the wheel rim to inside the wheel rim.

2. A tool according to claim 1, wherein the body is connected to the shoe via an articulated joint.

3. A tool according to claim 1 or claim 2, wherein the toe portion is tapered to assist in lifting the bead over the radially outer edge of the wheel rim as the tool is advanced circumferentially.

4. A tool according to any preceding claim, further comprising an arm extending from the body and provided with a bead-engaging portion, wherein when installing a tyre on a wheel rim, the bead-engaging portion is arranged to contact a portion of the tyre bead that is on the outside of the wheel rim, and wherein applying a force to the handle portion of the body, with the shoe acting as a fulcrum, enables the bead-engaging portion to apply a force to the bead to assist in lifting the bead over the radially outer edge of the wheel rim.

5. A tool according to claim 4, wherein the bead-engaging portion comprises a roller.

6. A tool according to any preceding claim, wherein the body is cranked such that, when the shoe is positioned on a wheel rim for installing a tyre, the handle portion is angled away from the plane of the wheel.

7. A tool for removing a tyre from a wheel rim, the tool comprising:
a removal hook comprising a leading edge for inserting between the tyre and the wheel rim; and
a body, connected to the removal hook, providing a handle portion, for urging the removal hook to prise a portion of the bead of the tyre over the radially outer edge of the wheel rim,
wherein the body is connected to the removal hook via an articulated joint to enable the body to be rotated relative to the removal hook.

8. A tool according to claim 7, wherein the removal hook comprises a lip along the leading edge for retaining a portion of the tyre bead.

9. A tool according to claim 7 or 8, wherein the body is cranked such that, when the removal hook is positioned between the outer side wall of a wheel rim and the bead of a partially removed tyre, the handle portion is angled away from the plane of the wheel.

10. A tool according to claim 7, 8 or 9, further comprising at least one motion restrictor to limit the extent of rotation of the body relative to the removal hook.

11. A tool according to any one of claims 1 to 6 in combination with a tool according to any one of claims 7 to 9, wherein the body is in common.

12. A tool according to claim 11, wherein the shoe and removal hook are positioned at opposite ends of the body.

13. A tool according to any preceding claim, wherein the body has a length in the range of from 80 mm to 180 mm.
